# EUROPEAN PATENT APPLICATION

(11) **EP 0 980 814 A2**
(43) Date of publication of application: **23.02.2000**
(21) Application number: 99202101.4
(22) Date of filing: 29.06.1999
(51) Int. Cl.: B62D 7/18

(54) **Steering knuckle and method of manufacture**

(30) Priority: 31.07.1998 GB 9816685
(71) Applicant: Delphi Technologies, Inc., Troy, MI 48007 (US)
(72) Inventor: Tigges, Rolf D., 60128 Plailly (FR)
(74) Representative: Denton, Michael John

(57) **Abstract**

A steering knuckle (10) for a motor vehicle comprising an annular portion (12); a first arm (14) connected at one end (20) to the annular portion and having a free end (22) with a steering system attachment bracket (24); a second arm (16) connected at one end (26) to the annular portion and having a free end (28) with a suspension mounting bracket (30); and a pivot mounting bracket (18) connected to the annular portion; wherein the steering knuckle is cast in one piece from metal; and wherein the second arm is formed with a hollow tubular portion (32) during the casting process by using a reciprocating internal die, the tubular portion being closed at the end (34) adjacent the suspension mounting bracket. Provides a steering knuckle with reduced weight.

## Description

### Technical Field

The present invention relates to a steering knuckle for a motor vehicle, and to a method of manufacturing the steering knuckle.

### Background of the Invention

A steering knuckle is positioned in a motor vehicle adjacent each front wheel. The steering knuckle provides support for the wheel bearing; and a mechanical connection between the vehicle chassis, the shock absorber or suspension strut for the wheel, and the steering system of the vehicle. It is common practice to manufacture the steering knuckle from a casting. In order to reduce weight, it has been proposed to manufacture the steering knuckle from cast aluminium.

### Summary of the Invention

It is an object of the present invention to provide an improvement over known cast steering knuckles.

A steering knuckle in accordance with the present invention for a motor vehicle comprises an annular portion; a first arm connected at one end to the annular portion and having a free end with a steering system attachment bracket; a second arm connected at one end to the annular portion and having a free end with a suspension mounting bracket; and a pivot mounting bracket connected to the annular portion; wherein the steering knuckle is cast in one piece from metal; and wherein the second arm is formed with a hollow tubular portion during the casting process by using a reciprocating internal die, the tubular portion being closed at the end adjacent the suspension mounting bracket.

The present invention also includes a method of manufacturing a steering knuckle as defined above, comprising providing an external die having an internal shape substantially corresponding to the external shape of the steering knuckle; sliding an internal die in a first direction into the area of the external die within which the hollow tubular portion of the second arm is formed; pouring molten metal into the external die; allowing the molten metal to solidify; sliding the internal die out of the external die in a reverse direction to the first direction; and removing the steering knuckle from the external die.

The present invention provides a steering knuckle with reduced weight and reduced cost.

### Brief Description of the Drawings

The present invention will now be described, by way of example, with reference to the accompanying drawings, in which:

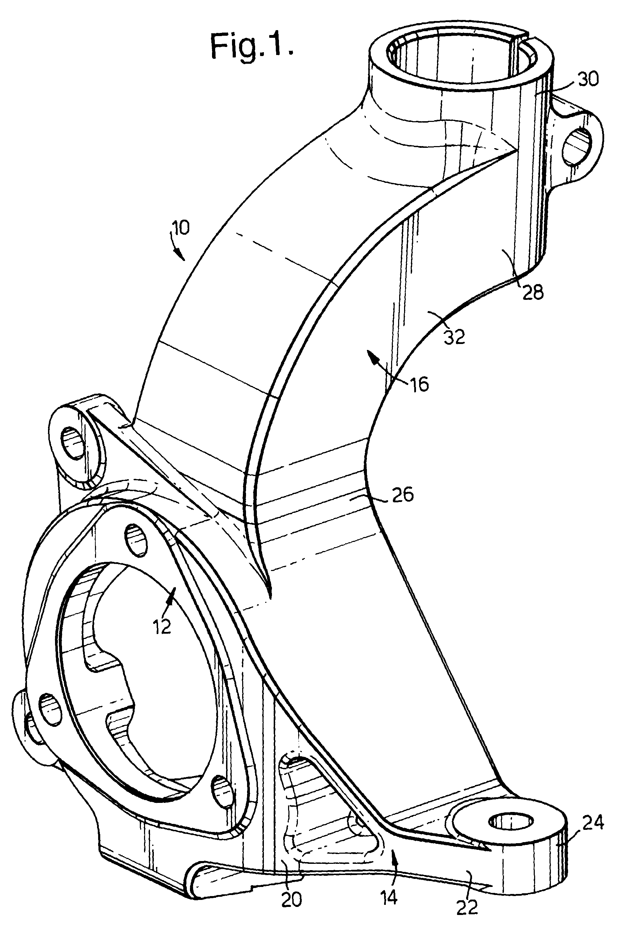

Figure 1 is a perspective view of a steering knuckle in accordance with the present invention from one side;

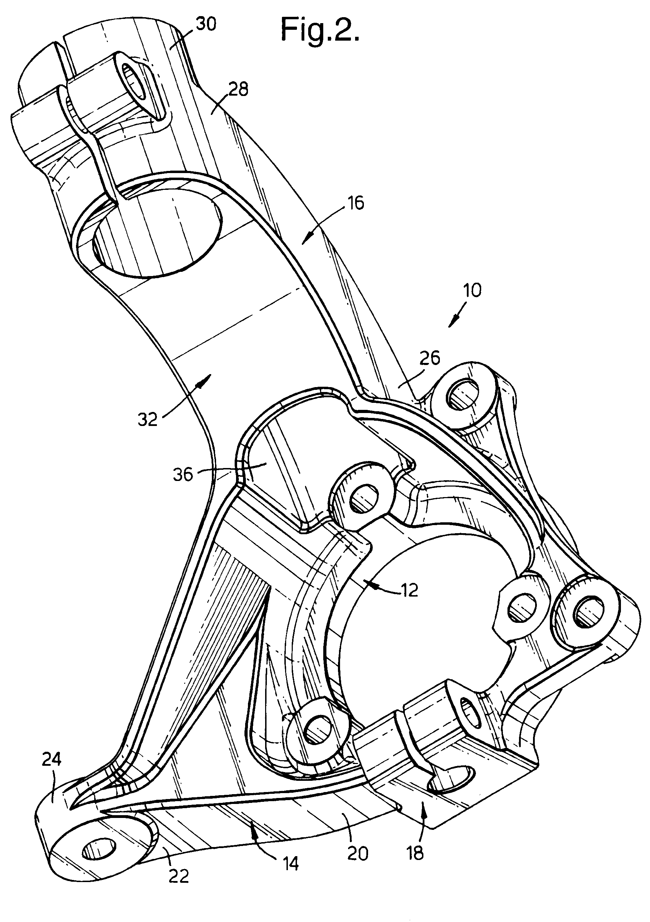

Figure 2 is a perspective view of the steering knuckle of Figure 1 from the other side; and

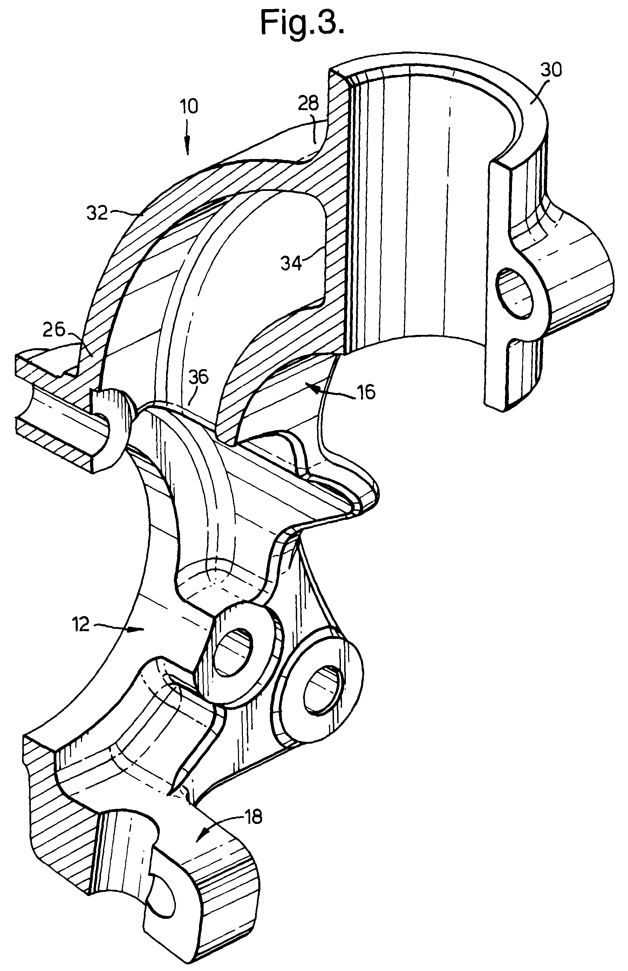

Figure 3 is a cross-sectional view of the steering knuckle of Figures 1 and 2.

### Description of the Preferred Embodiment

Referring to the drawings, the steering knuckle 10 is for use in a motor vehicle and is positioned adjacent a front wheel (not shown) of the motor vehicle. The steering knuckle 10 is formed in one piece and comprises an annular portion 12, a first arm 14, a second arm 16, and a pivot mounting bracket 18. The annular portion 12 provides support for the wheel bearing (not shown) and, where required, allows passage of a drive shaft (not shown) for the wheel. The first arm 14 is connected at one end 20 to the annular portion 12, and has a free end 22 with an attachment bracket 24 for connection to the steering system (not shown) of the motor vehicle. The second arm 16 is connected at one end 26 to the annular portion 12, and has a free end 28 with a mounting bracket 30 for connection to a shock absorber or suspension strut (not shown) for the wheel. The pivot mounting bracket 18 is connected to the annular portion 12 and is for a pivot connection with the chassis (not shown) of the motor vehicle. The steering knuckle 10 as described above, and its operation, is known to those skilled in the art and will not be described in greater detail.

The steering knuckle 10 is cast in one piece from metal in an external die (not shown) having an internal shape which substantially corresponds to the external shape of the steering knuckle. During the casting process, an internal die (not shown) is positioned in the area of the external die in which the second arm 16 is formed such that the second arm is formed with a hollow tubular portion 32 which is closed at the end 34 adjacent the mounting bracket 30, and open at the end 36 adjacent the annular portion 12. During casting, the internal die is slid in a first direction into position within the external die, molten metal is poured into the external die, and after solidification, the internal die is slid out of the external die in a reverse direction to the first direction. The tubular portion 32 and the internal die are preferably arcuate. In this case, the internal die is preferably rotated in the first direction into position in the external die, and then rotated in the reverse direction after solidification of the molten metal. The external die and/or the internal die is preferably water cooled. The internal die is preferably shaped such that the cross-sectional area of the hollow tubular portion 32 gradually increases from the closed end 34 to the open end 36. The internal die may have any suitable cross-sectional shape such that the hollow tubular portion 32 is formed with a square internal cross-section, as shown, or any other internal shape, such as circular, rectangular, etc.

By forming the second arm 16 with a hollow tubular portion 32, the weight of the steering knuckle 10 can be further reduced compared to a steering knuckle having the same external dimensions but with a solid second arm. Cost improvements are achieved because of a reduction in material, and because the removable internal die can be re-used (when compared to a sand core). The use of cooling for the internal die and/or the external die provides improvements in material properties in the steering knuckle.

## Claims

1. A steering knuckle for a motor vehicle comprising an annular portion; a first arm connected at one end to the annular portion and having a free end with a steering system attachment bracket; a second arm connected at one end to the annular portion and having a free end with a suspension mounting bracket; and a pivot mounting bracket connected to the annular portion; wherein the steering knuckle is cast in one piece from metal; and wherein the second arm is formed with a hollow tubular portion during the casting process by using a reciprocating internal die, the tubular portion being closed at the end adjacent the suspension mounting bracket.

2. A steering knuckle as claimed in Claim 1, wherein the hollow tubular portion is arcuate.

3. A steering knuckle as claimed in Claim 1 or Claim 2, wherein the hollow tubular portion gradually increases in cross-sectional area from the closed end.

4. A steering knuckle as claimed in any one of Claims 1 to 3, wherein the hollow tubular portion has a square or round internal cross-section.

5. A method of manufacturing a steering knuckle as claimed in Claim 1, comprising providing an external die having an internal shape substantially corresponding to the external shape of the steering knuckle; sliding an internal die in a first direction into the area of the external die within which the hollow tubular portion of the second arm is formed; pouring molten metal into the external die; allowing the molten metal to solidify; sliding the internal die out of the external die in a reverse direction to the first direction; and removing the steering knuckle from the external die.

6. A method as claimed in Claim 5, wherein the internal die is arcuate in shape, the internal die being rotated in the first direction for sliding into position in the external die, and then rotated in the reverse direction for sliding out of the external die.

7. A method as claimed in Claim 5 or Claim 6, wherein the external die and/or the internal die are water cooled.
